# EUROPEAN PATENT SPECIFICATION

(11) **EP 2 699 772 B1**
(45) Date of publication and mention of the grant of the patent: **29.07.2015**
(21) Application number: 12717073.6
(22) Date of filing: 11.04.2012
(51) Int. Cl.: F01N 3/20, F04B 43/12

(54) **A PUMPING DEVICE AND A LIQUID INJECTING SYSTEM COMPRISING SUCH A PUMPING DEVICE**
PUMPVORRICHTUNG UND FLÜSSIGKEITSEINSPRITZSYSTEM MIT EINER DERARTIGEN PUMPVORRICHTUNG
DISPOSITIF DE POMPAGE ET SYSTÈME D'INJECTION DE LIQUIDE COMPRENANT LEDIT DISPOSITIF DE POMPAGE

(30) Priority: 18.04.2011 EP 11162871
(43) Date of publication of application: 26.02.2014
(73) Proprietor: Inergy Automotive Systems Research (Société Anonyme), 1120 Brussels (BE)
(72) Inventor: VAN SCHAFTINGEN, Jules-Joseph, B-1300 Wavre (BE); OP DE BEECK, Joel, B-2547 Lint (BE)
(74) Representative: Remy, Vincent Noel Paul
(86) International application number: PCT/EP2012/056513
(87) International publication number: WO 2012/143268

(56) References cited:
- GB-A- 2 425 523
- US-A1- 2010 212 303

## Description

An aspect of the invention relates to a pumping device. The invention further relates to a liquid injecting system comprising such a pumping device.

Such a device and system find a particular, though non exclusive, application, in a Selective Catalytic Reduction SCR system used in the automobile industry.

The SCR system is a system for the catalytic reduction of the NOx from the exhaust gas of an internal combustion engine using urea as a liquid ammonia precursor. Typically, the SCR system is used in relationship to diesel engines, and in particular to the diesel engines of vehicles and particularly to the diesel engines of heavy goods vehicles.

A SCR system generally comprises at least one tank for storing the urea solution and also a set of components for feeding this to the exhaust gas.

Generally, this set may comprise a pumping device, a filter, a valve, urea feed conduits, an injector and, in some cases, an urea return conduit. The presence of liquid within the pumping device could result in freezing issues including freeze expansion damage when the temperature of the pumping device is below the freezing temperature of the pumped liquid. A solution is to provide the pumping device with a heating device. The heating device may comprise heating element under the form of windings and an electronic module for activating the windings in dependence of the temperature. Another solution is to design the pumping device to resist the freeze expansion of the liquid. As an example, the pumping device may comprise deformable membranes, foams, or wet-dry interfaces.

However, this is not satisfactory because it corresponds to a complex architecture and implies providing the pumping device with multiple additional seals.

Document US 2010/0212303 discloses a device including an additive tank connected by an pipe to an injector of liquid additive in the exhaust system of a vehicle, with a pump, provided on the pipe, including a cylinder and a piston delimiting in the cylinder a chamber, where an actuator is coupled to the piston to cause it to retreat, drawing additive into the chamber and compressing a spring acting on the piston so that its forward movement is under controlled pressure.

It is an object of the invention to propose a pumping device that overcomes the above mentioned drawbacks.

Therefore, the present invention concerns a device for pumping a liquid comprising:
- a rigid core tube;
- a flexible tube positioned outside and at least partly around said rigid core tube;
- a passage for the liquid from an inlet towards an outlet of the device and comprising a free volume extending between the rigid core and the flexible tube; and
- a squeezing arrangement comprising at least one pressing element capable of acting on the flexible tube so as to alter the shape and/or size of the free volume.

In the above, the terms "tube" are intended to designate objects with an elongated shape of generally cylindrical section, but which must not necessarily be straight. They may comprise a curved section for instance, like it is the case with peristaltic pumping devices. The same comment applies to the term "passage" which generally comprises at least one elongated volume which must not be straight. Even the part of the passage between the rigid core and the flexible tube must not be straight: it could for instance be helicoidal.

Generally, the passage comprises at least 2 free volumes of elongated shape located between the rigid core and the flexible tube, at 180° from each other around the periphery of the tubes (i.e. located on both sides of the rigid and flexible tubes). Hence, the squeezing arrangement generally comprises at least 2 pressing elements located opposite to each other along the tubes, each acting on one of the free volumes.

The pressing element(s) are moving mechanical parts which can have an alternating movement or a rotating and linear movement (like wheels for instance) between to end positions. It is through their motion and pressing/squeezing action on the flexible tube in the part of the passage between the rigid core and the flexible tube that they alter the shape and/or volume of said part and hence, create a pressure difference in said passage allowing the pumping of the liquid.

According to one aspect:
- the core tube comprises an internal bore;
- the flexible tube is sealed against the core tube substantially at both ends of the flexible tube; and
- the free volume communicates with the internal bore of the core tube through at least one opening.

In that embodiment, the passage for the liquid is at least partly defined by the free volume and by the internal bore. Other embodiments might not require such an internal bore but only one or more "external" free volumes as defined above.

According to optional features of the pumping device, the core tube may comprise a dry part (not in contact with liquid) for accommodating an electrical or electronic component. The component may comprise at least one heating wire substantially crossing (passing through longitudinally, from one extremity to the other) the dry part of the core tube.

The squeezing arrangement may comprise pressing elements for squeezing the flexible tube against the core tube substantially in a direction perpendicular to a flexible and core tubes symmetrical axis.

The pressing elements may be coupled to a cam operated by a motor (embodiment with an alternating motion) or they may be wheels also operated by a motor, preferably an electrical motor in both cases.

The pressure regulation arrangement may comprise a pressure switch connected to the squeezing arrangement, the pressure switch activating the squeezing arrangement when the pressure within the wet part is comprised in a determined pressure domain. Alternatively, the pressure regulation arrangement may comprise a pressure sensor acting indirectly (typically through an electric or electronic command to modify its speed) on the squeezing device so as to maintain the pressure in a given range.

The pressure regulation arrangement may comprise an intermediate chamber positioned upstream a pressurization check-valve, the pressurization check-valve being in an open state when the liquid pressure in the intermediate chamber exceeds the liquid pressure downstream the pressurization check-valve by a first defined differential pressure value. In this embodiment, the pressurization check-valve is preventing the backflow of liquid from the outlet to the inlet of the pump. Preferably, this valve opens at a pressure difference of about 0.1 bar.

The pressure regulation arrangement may comprise a by-pass chamber positioned upstream a by-pass check valve, the by-pass check valve being positioned upstream the intermediate chamber, the by-pass chamber by-passing the by-pass check valve, the by-pass check valve being in an open state when the liquid pressure in the intermediate chamber exceeds the liquid pressure upstream the bypass check-valve by a second defined differential pressure value. In this embodiment, the by-pass check valve is preventing the pressure from rising too high inside the device. Preferably, this valve opens at a pressure difference slightly above (of a few tenths of bar for instance) the desired working pressure (for instance, it may open at about 5.3 bar if a working pressure of 5 bar is required).

Preferably, the pressure regulation arrangement comprises at least one of the following devices: a pressurization check valve (28) a by-pass check valve (27) and a pressure switch or a pressure sensor.

The pressure regulation arrangement may also comprise a pressure damping chamber having a predetermined volume adapted to damp pulsations of the liquid pressure.

The core tube may comprise an upstream part and a downstream part coupled together through the pressure damping chamber.

The flexible tube can be made of an elastomer (EPDM, NBR, a flexible grade of polyamide...) and additionally or alternatively, the core tube can be made of a rigid plastic material chosen among polyacetal (like POM or polyoxymethylene) or rigid polyamides (PA).

According to another aspect of the invention, there is provided a device as described above wherein the squeezing arrangement comprises a pair of wheels pressing on the flexible tube and moving alternatively from left to right and from right to left along said tube, between 2 end positions.

In this embodiment, the rigid core tube may comprise an inner bore and upstream and downstream holes and the wheels can then move between a position left from the upstream holes to a position left from or right above the downstream holes.

Alternatively, the passage for the liquid may be completely external to the core tube, in which case the free volume preferably extends up to the left end of said core tube and at the end of their left course, the wheels are preferably lifted so as to let liquid in the free volume.

According to a further aspect, there is provided a liquid injecting system comprising a tank for storing the liquid and a feeding device for injecting the liquid into a fluid flow, characterized in that the feeding device comprises a pumping device as described above.

According to still a further aspect, an application of the liquid injecting system to a selective catalytic reduction (SCR) system is provided wherein the liquid is a urea solution, the fluid flow is an exhaust gas flowing in an exhaust line coupled to an internal combustion engine.

The pumping device of the invention has numerous advantages, in particular an improved resistance to wear and, consequently, an improved durability. The various sealings, when present, are simple to implement. The pumping device shows an improved resistance to freeze expansion. Additional functions can be integrated within the pumping device in a simple and reliable manner. The pumping device also enables dampening pressure oscillations.

The pumping device according to the invention could be used to pump any type of liquid. However, it is well adapted to pump a corrosive liquid, in particular a liquid comprising urea for an SCR application.

The term "urea" is understood to mean any, generally aqueous, solution containing urea. An eutectic water/urea solutions for which there is a quality standard may be used in SCR application. For example, according to the standard DIN 70070, in the case of the AdBlue™ solution (commercial solution of urea), the urea content is between 31.8% and 33.2% by weight (i.e. 32.5 +/-0.7 %) hence an available amount of ammonia between 18.0% and 18.8%. Other solutions may be used in SCR application for example the urea/ammonium formate mixtures, also in aqueous solution, sold under the trade name Denoxium™ and of which one of the compositions (Denoxium-30) contains an equivalent amount of ammonia to that of the AdBlue™ solution. The latter have the advantage of only freezing from -30°C onwards (as opposed to -11°C), but have the disadvantages of corrosion problems linked to the possible release of formic acid. The pumping device of the present invention is particularly advantageous in this context of eutectic water/urea solutions.

The present invention is illustrated by way of examples and not limited to the accompanying drawings, in which like references indicate similar elements and which illustrate preferred embodiments of the invention:
- Figure 1 schematically illustrates an SCR system coupled to an exhaust line of an engine;
- Figure 2 is a side partial cross-section view schematically illustrating a pumping device according to an embodiment of the invention;
- Figure 3 is a cross-section view along plane I-I of Figure 2, illustrating an upstream part of the core tube;
- Figures 4, 5 and 6 are cross-section views along plane II-II, III-III and IV-IV of Figure 3, respectively;
- Figure 7 is a cross-section view along plane V-V of Figure 2, illustrating a downstream part of the core tube;
- Figures 8, 9 and 10 are cross-section views along plane VI-VI, VII-VII and VIII-VIII of Figure 7, respectively; and
- Figures 11 and 12 show two different embodiments of squeezing arrangements according to the invention.

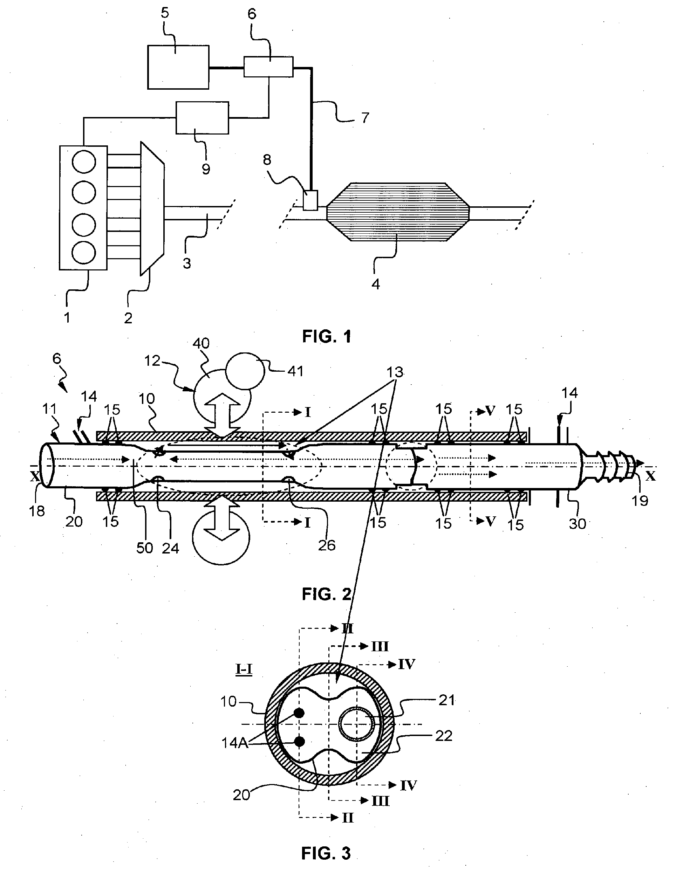

Figure 1 schematically illustrates an example of an SCR system to which the invention can be applied. An internal combustion engine 1 is coupled to an exhaust line 3 through an exhaust manifold 2. The exhaust line 3 comprises at least one converter 4. These elements, well known in the art, being not germane to the present invention, will not be further described. The SCR system comprises a tank 5, a pumping device 6 (we that can eventually be integrated into the tank), a conduit 7, and an injector 8. The tank 5 for storing the urea solution is coupled to the injector through the pumping device 6 and the conduit 7. The injector injects the urea solution into the exhaust gases for the catalytic reduction of the NOx from the exhaust gases taking place into the converter 4. A supervising module 9 connected to the engine 1 and to the pumping device 6 automatically commands the urea solution injection in the exhaust gas by means of the pumping device in dependence of the operating condition of the engine. The supervising module 9 may be implemented by a processor appropriately programmed.

Figure 2 is a side partial cross-section view schematically illustrating the pumping device 6 of the invention.

The pumping device comprises a flexible tube 10, a core tube 11, a free volume (13) between said tubes, a squeezing arrangement 12 and, as preferred embodiments, a pressure regulation arrangement and a heating arrangement 14.

Both the flexible tube 10 and the core tube 11 are cylindrical tubes having substantially the same axis X-X. The flexible tube 10 has a greater diameter than the core tube 11 so as to be positioned outside the core tube 11 (note however that the flexible tube can be extended; eventually when free it could be at a diameter very close to the core). The flexible tube 10 extends longitudinally along the core tube 11 such as to cover at least a portion of the core tube 11. The core tube 11 comprises at least one excavation so as to obtain the above mentioned free volume (13).

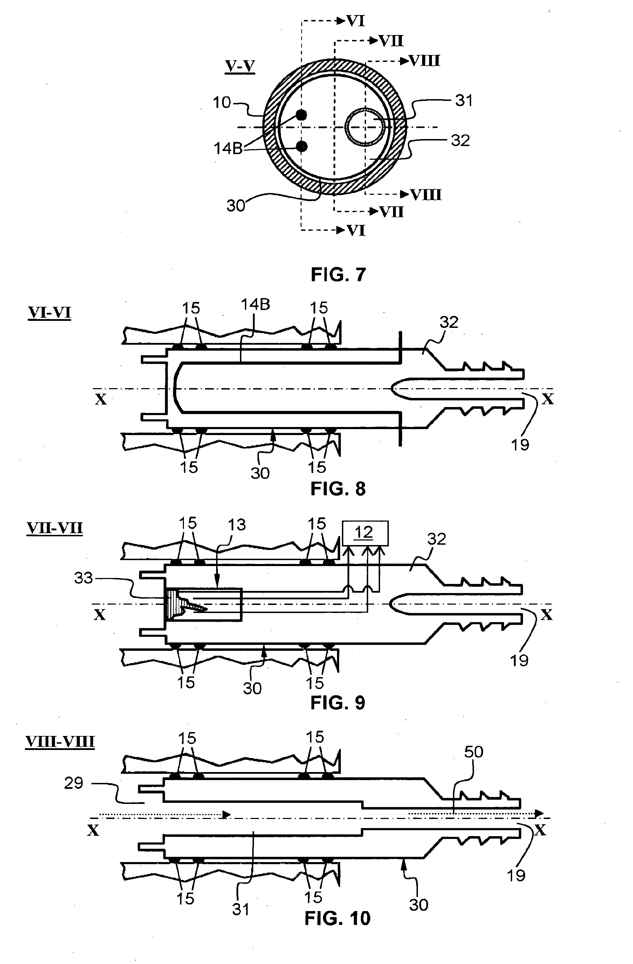

The core tube 11 may be realized in an advantageous embodiment as an upstream part 20 and a downstream part 30. The upstream part 20 is schematically represented in details in Figures 3 to 6. The downstream part 30 is schematically represented in details in Figures 7 to 10. Nevertheless, the core tube may be realized as a single part (not shown).

The flexible tube 10 is sealed against the core tube 11 substantially at both ends of the flexible tube. The flexible tube 10 may be further sealed against the core tube 11 at the ends of the upstream part 20 and the downstream part 30 facing each other when the core tube 11 is realized in two parts. Advantageously, the sealing is obtained by a protruding ring 15 formed in the material of the core tube 11 and forced to contact the internal wall of the flexible tube 10. Alternatively, an appropriate ring-type seal may be positioned between the external wall of the core tube 11 and the internal wall of the flexible tube 10. Advantageously, a double protruding ring or a double ring-type seal is used.

Figure 3 is a cross-section view along plane I-I of Figure 2, illustrating the upstream part 20 of the core tube 11. The upstream part 20 of the core tube 11 defines a first internal bore 21 and a first dry part 22. The first internal bore 21 of the core tube is coupled to the tank 5 by an inlet 18.

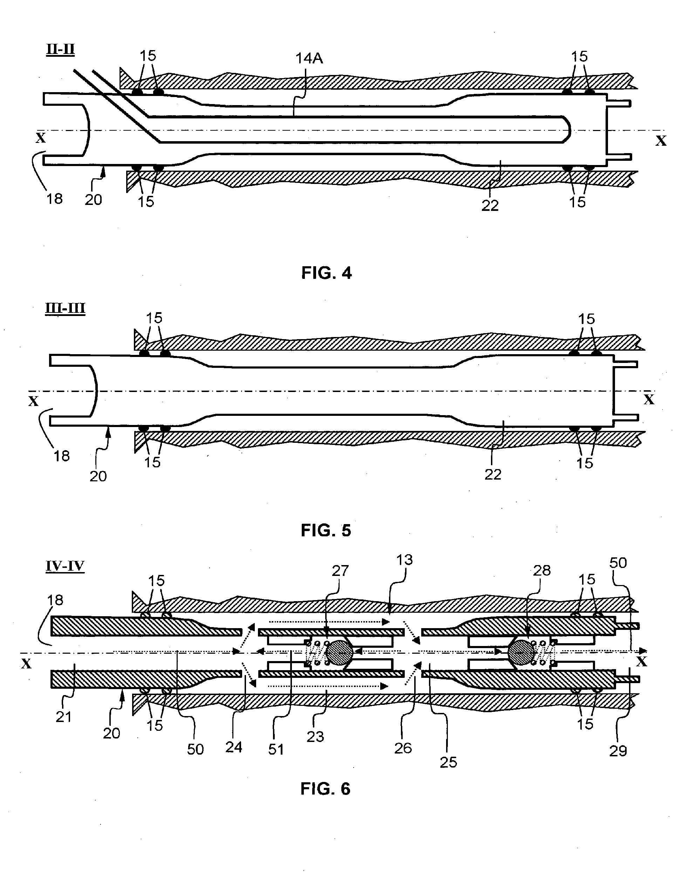

Figure 4 is cross-section view along plane II-II of Figure 3. Figure 5 is a cross-section view along plane III-III of Figure 3. Figure 6 is a cross-section view along plane IV-IV of Figure 3. The first dry part 22 comprises the heating arrangement 14A that may be implemented by a heating wire crossing at least a portion of the first dry part 22. The first dry part 22 is a solid portion, for example made of plastic material.

Figure 7 is a cross-section view along plane V-V of Figure 2, illustrating the downstream part 30 of the core tube 11. The downstream part 30 of the core tube 11 defines a second internal bore 31 and a second dry part 32. The second internal bore 31 of the core tube is coupled to the injector 8 by an outlet 19.

Figure 8 is a cross-section view along plane VI-VI of Figure 7. Figure 9 is a cross-section view along plane VII-VII of Figure 7. Figure 10 is a cross-section view along plane VIII-VIII of Figure 7.The second dry part 32 comprises the heating arrangement 14B that may be implemented by a heating wire or coil crossing at least a portion of the second dry part 32. The second dry part 32 is also a solid portion, for example made of plastic material.

The heating wires are mainly used to put the pumping device to an appropriate temperature. This is particularly the case when freezing of the liquid can occur. In addition, the SCR system may be positioned close to the exhaust line so as to benefit from the heat of the exhaust gas.

Though not shown in the drawings, the first dry part 22 and the second dry part 32 may integrate other functional elements, for example any kind of sensors (e.g. pressure or temperature sensor), any kind of electronic components (e.g. processor), etc....

The squeezing arrangement 12 applies an alternating pressure onto the external wall of the flexible tube 10 such as to squeeze the flexible tube 10 against the core tube 11 in an alternate manner. This alternating movement successively expands/contracts the free volume (13) and hence, generates a fluid pressure within the internal bores 21, 31 of the core tube 10.

The squeezing arrangement 12 comprises pressing elements 40 for compressing the flexible tube substantially in a direction perpendicular to the axis X-X of the flexible tube. As an example (not shown), the pressing elements 40 are coupled to a cam operated by an electrical motor 41. Any other implementation of a squeezing arrangement providing an alternating compression onto the flexible tube 10 may be convenient, for example a rotor with a roller or a cam. The operating conditions of the pumping device can be driven by the electrical motor. In particular, the pressure and hence, flow-rate of the pumping device can be finely defined by adapting the rotation speed of the electrical motor, thus the squeezing/pressing frequency.

The pumping device 6 according to the preferred embodiment of the invention which is depicted in the Figures 1-10 comprises a by-pass check valve 27, a pressurization check valve 28, an impulse chamber 23, an intermediate chamber 25, a pressure damping chamber 29, and a pressure switch 33. According to said embodiment of the invention, these elements are integrated inside the core tube 11 and they contribute to the functioning and regulation of the device 6, which will be explained in details hereinafter in relationship with Figures 6, 9 and 10.

The by-pass check valve 27 and the pressurization check valve 28 may be ball type check valves that allow forward flow and that block reverse flow. The by-pass check valve 27 and the pressurization check valve 28 are positioned so as to allow flow in opposite directions as explained hereinafter.

Figure 6 is a cross-section view along plane IV-IV of Figure 3. The liquid 50 flows from the tank and penetrates into the first internal bore 21 of the pumping device 6 through the inlet 18. Then, the liquid 50 flows into the impulse chamber 23 through an upstream hole 24. The liquid 50 further flows from the impulse chamber 23 into the intermediate chamber 25 through a downstream hole 26. The liquid 50 further flows from the intermediate chamber 25 into the pressure damping chamber 29 through the pressurization check valve 28. A by-pass flow of liquid 51 may return back from the intermediate chamber 25 towards the inlet 18 through the bypass check valve 27.

Advantageously, a plurality of upstream 24 and downstream 26 holes are circumferentially positioned around the portion of the upstream part 20 of the core tube 11 close to the first internal bore 21. The upstream 24 and downstream 26 holes are positioned upstream and downstream the bypass check valve 27, respectively. They enable liquid flowing in and out of the impulse chamber 23.

Figure 9 is a cross-section view along plane VII-VII of Figure 7. The pressure switch 33 is an electromechanical switch that makes electrical contact when a predefined pressure has been reached on its input. The pressure switch is connected to the squeezing arrangement 12 such as to activate the squeezing arrangement when the pressure within the internal bore is comprised in a determined pressure domain. Practically, the pressure switch 33 may provide an "on/off" command signal to the electrical motor 41 of the squeezing arrangement 12. Advantageously, the pressure switch sends an "off" command signal to stop the operation of the motor when a contact is established on pressure rise, namely when the pressure reaches a predefined high pressure level. When the pressure falls below the predefined low pressure level, the pressure switch sends an "on" command signal to resume the operation of the motor.

Figure 10 is a cross-section view along plane VIII-VIII of Figure 7. The liquid 50 flows from the pressure damping chamber 29 into the second internal bore 31 of the core tube and towards the outlet 19. Finally, the liquid 50 flows towards the injector 8.

The upstream part 20 and the downstream part 30 are coupled together through the pressure damping chamber 29. The pressure damping chamber 29 may be realized by two half pressure damping chambers. Each half pressure damping chamber may then be integral with the corresponding part and disposed at the end of each part 20, 30 that are positioned in abutment against each other. As alternatives not shown, the pressure damping chamber may be integral of either the upstream part 20 or the downstream part 30, or it may be a separate part. The damping chamber volume can also be increased by positioning upstream and downstream parts 20 and 30 at some distance without any abutment inside the flexible tube 10. Advantageously, the tube 10 can provide additional flexibility in this section, for instance by featuring corrugations along the pressure damping chamber 29 (not illustrated here).

The ends of the core tube 11 comprise the appropriate interfaces to accommodate coupling with the conduit 7 in tight manner, like corrugations as shown in the Figures. Such interface may take various shapes that are known in the art.

The flexible tube, the upstream part and the downstream part of the core tube may be manufactured by injection molding of plastic material such as polyoxymethylene or polyacetal POM or polyamides (Nylon) PA. As an example, in particular for SCR applications, the pumping device has a length in the order of 120 mm and a diameter in the order of 10 mm. The bypass check valve is characterized by a differential pressure around 5,3 bar and the pressurization check-valve by a differential pressure around 0,1 bar. The flow-rate delivered by the pumping device is of the order of 1 liter/hour, for example from 0,1 l/h to 10 l/h.

The operation of the pumping device 6 will now be described.

The alternative pressing movement of the squeezing arrangement 12 onto the external wall of the flexible tube 10 successively creates a relative vacuum and a relative pressure in the free volume 13 so that the liquid is transmitted to the first internal bore 21 of the core tube through hole (24). This initiates an aspiration of the liquid 50 at the inlet 18 towards the impulse chamber 23 and towards the intermediate chamber 25. The liquid begins to be pressurized in the intermediate chamber 25. When the pressure of the liquid in the intermediate chamber 25 exceeds the pressure of the liquid downstream the pressurization check-valve 28 by a first defined differential pressure value, e.g. 0,1 bar, the pressurization check-valve 28 opens. The pressurization check-valve 28 lets flow the liquid 50 downstream towards the second internal bore 31 of the core tube and the outlet 19. The liquid 50 flows into the conduit 7 towards the injector 8. When the conduit is full with liquid, the pressure of liquids into the conduit 7 and in the pumping device 6 tends to increase. When the pressure of the liquid in the intermediate chamber 25 exceeds the pressure of the liquid upstream the bypass check-valve 27 by a second defined differential pressure value, e.g. 5,3 bar, the bypass check-valve 27 opens. The bypass check-valve 27 lets flow upstream the bypass flow 51. Thus, a fine regulation of the liquid pressure provided at the outlet of the pumping device 6 and to the injector can be obtained.

The pressure damping chamber 29 forms a chamber of controlled volume. It constitutes a damping zone for the variation of the liquid pressure during the pumping process. This is particularly advantageous to reduce the liquid pressure pulsations/fluctuations downstream the pumping device.

Further, the pressure switch or sensor 33 coupled to the second internal bore 30 may be designed to command or regulate the operation of the pumping device 6 within a defined pressure range. The pressure switch or sensor 33 can prevent exceeding a maximum absolute pressure value, e.g. 5,5 bar and also, prevent going below a minimum absolute pressure value, e.g. 4,5 bar.

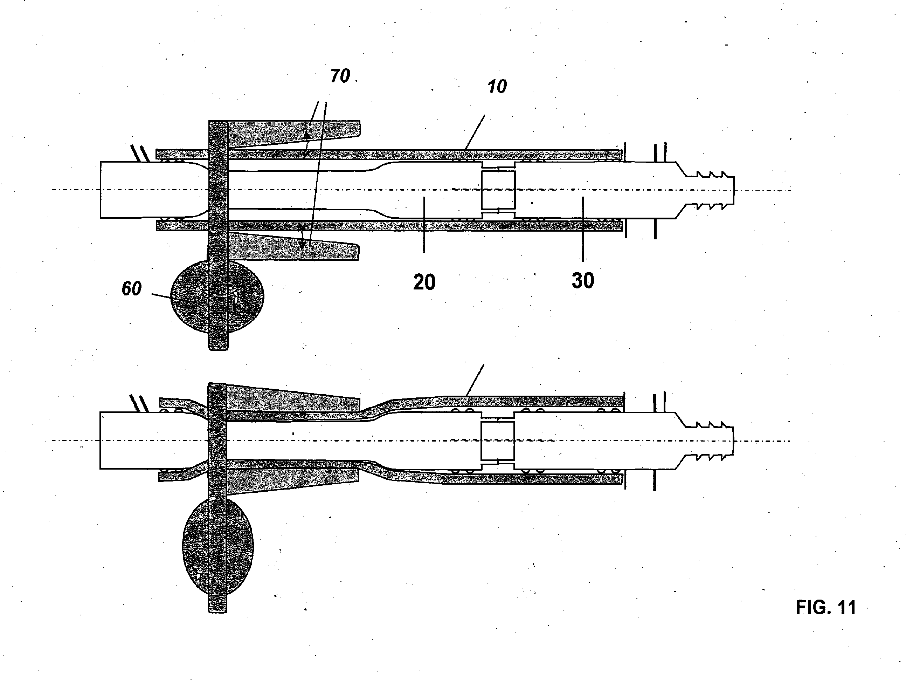

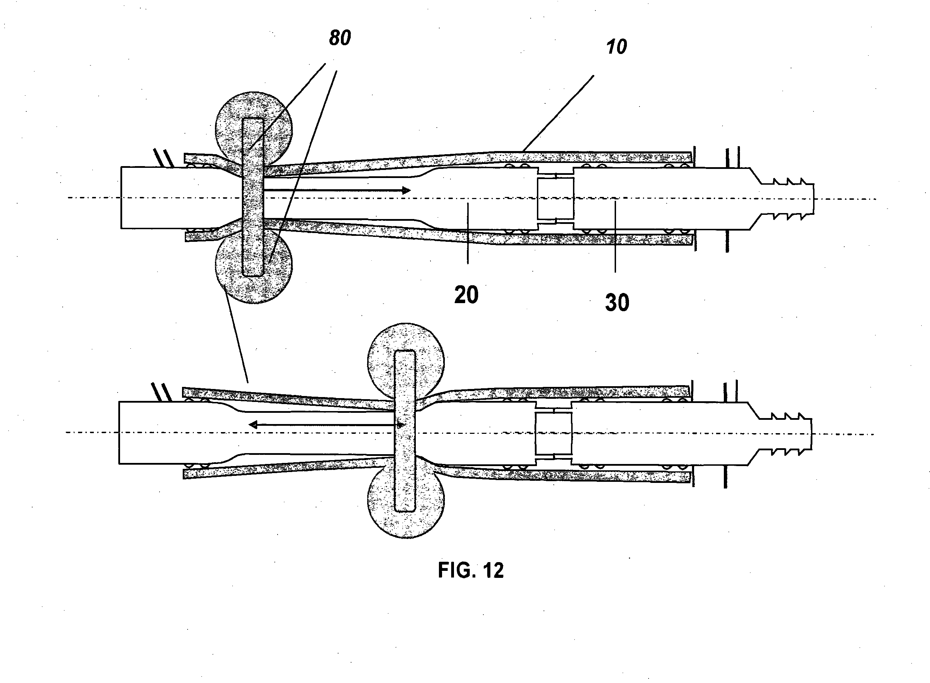

Figures 11 and 12 describe two different embodiments of squeezing arrangements according to the invention.

The embodiment of Figure 11 involves a cam (60) activated by a DC motor (not shown) and which applies an alternating movement to 2 pressing parts (70).

The embodiment of Figure 12 involves a pair of wheels (80) pressing on the flexible tube (10) and moving alternatively from left to right and from right to left along said tube. In this embodiment, the upstream and the downstream parts (20, 30) forming the rigid core tube (11) may comprise an inner bore as in the embodiment of Figures 2-10. In that case, if the bore is provided with check valves (27, 28) as described above (but not shown in this Figure), the wheels (80) preferably move between a position left from the upstream holes (24) to a position left from the downstream holes (26) (which are however not shown in this Figure).

However, this embodiment could also work without check valves (27, 28) and in that case, the wheels preferably move from a position left of the upstream holes (24) to right above the downstream holes (26) so as to close them. Pressure has then built up and liquid can flow through the passage until the pressure drops below a given value and the wheels then travel left again. In order to prevent too much liquid from being sucked through the downstream holes (26), said holes are preferably dimensioned with a reduced diameter.

Alternatively, the passage for the liquid may be only external to the core tube (11, 20, 30) and if so, the free volume (13) preferably extends up to the left end of upstream part (20) and at the end of their left course, the wheels (80) are preferably lifted so as to let liquid in.

The pumping device of the invention has numerous advantages.

The liquid pressure at the outlet of the pumping device is obtained by pressing on the flexible tube. The internal core insures low deflection of the flexible tube (and so low wear).. Said flexible tube can be designed to resist to the squeezing movement so as to be compliant with the durability requirement of pumping device used in SCR system.

The core tube is positioned inside the flexible tube and is supporting various functions, namely pressurization, pressure regulation, pressure damping and heating. Also, the bypass flow is flowing though the core tube, avoiding the use of any additional specific conduit that must be sealed against the main path. The core tube also allows having all wirings in the dry portion of the pumping device. These wires are connected to the external environment without being in contact with the pumped liquid.

Further, the design of the pumping device when the components are manufactured in plastic material offers an appropriate resilience that can withstand the freezing expansion of liquid trapped into the pumping device when freezing condition occurs (e.g. the temperature of the pumping device is below the freezing temperature of the pumped liquid).

The pumping device could be used for all types of liquids, in particular corrosive fluids because the flexible tube and the core tube can be made of materials with high corrosion resistance. The pumping device can be used for relatively high pressures, for example around 10 bars. Consequently, the pumping device is particularly interesting for SCR applications, and specifically for the pumping of AdBlue as it is resisting freeze expansion.

The drawings and their description hereinbefore illustrate rather than limit the invention. The drawings are very diagrammatic.

The pressure values are examples, thus given as indications adapted to a specific application in a SCR system.

Any reference sign in a claim should not be construed as limiting the claim. The word "comprising" does not exclude the presence of other elements than those listed in a claim. The word "a" or "an" preceding an element does not exclude the presence of a plurality of such elements.

## Claims

1. Device for pumping a liquid comprising:
- a rigid core tube (11);
- a flexible tube (10) positioned outside and at least partly around said rigid core tube (11);
- a passage for the liquid from an inlet towards an outlet of the device and comprising a free volume (13) extending between the rigid core tube (11) and the flexible tube (10); and
- a squeezing arrangement (12) comprising at least one pressing element (40, 70, 80) capable of acting on the flexible tube (10) so as to alter the shape and/or size of the free volume (13).

2. Device according to the preceding claim, wherein the passage comprises at least 2 free volumes (13) of elongated shape located between the rigid core and the flexible tube, at 180° from each other around the periphery of the tubes (1a, 11) and wherein the squeezing arrangement (12) comprises at least 2 pressing elements (40) located opposite to each other along the tubes (10, 11), for acting on said free volumes (13).

3. Device according to any of the preceding claims, wherein the pressing element(s) (40) are moving mechanical parts (70) which have an alternating movement or wheels (80) having a rotating and linear movement between two end positions.

4. Device according to any of the preceding claims, wherein:
- the core tube (11) comprises an internal bore (21, 31);
- the flexible tube (10) is sealed against the core tube (11) substantially at both end of the flexible tube (10); and
- the free volume (13) communicates with the internal bore (21, 31) through at least one opening (24).

5. Device according to any of the preceding claims, comprising a pressurization check valve (28) and an intermediate chamber (25) positioned upstream the pressurization check-valve (28), the pressurization check-valve (28) being in an open state when the liquid pressure in the intermediate chamber (25) exceeds the liquid pressure downstream the pressurization check-valve (28) by a first defined differential pressure value.

6. Device according to the preceding claim, comprising an impulse chamber (23) and a by-pass check valve (27), the by-pass check valve (27) being positioned upstream the intermediate chamber (25), the impulse chamber (23) by-passing the by-pass check valve (27), the by-pass check valve (27) being in an open state when the liquid pressure in the intermediate chamber (25) exceeds the liquid pressure upstream the bypass check-valve (27) by a second defined differential pressure value.

7. Device according to claim 5 or 6, comprising a pressure regulation arrangement comprising at least one of the following devices: a pressurization check valve (28) a by-pass check valve (27) and a pressure switch or a pressure sensor.

8. Device according to any of the preceding claims, comprising a pressure damping chamber (29) having a predetermined volume adapted to damp pulsations of the liquid pressure.

9. Device according to the preceding claim, wherein the core tube (11) comprises an upstream part (20) and a downstream part (30) coupled together through the pressure damping chamber (29).

10. Device according to any of the preceding claims, wherein the flexible tube (10) is made of an elastomer (EPDM, NBR, a flexible grade of polyamide...) and wherein the core tube (11) is be made of a rigid plastic material chosen among polyacetal (like POM or polyoxymethylene) and rigid polyamides (PA).

11. Device according to any of the preceding claims, wherein the squeezing arrangement (12) comprises a pair of wheels (80) pressing on the flexible tube (10) and moving alternatively from left to right and from right to left along said tube (10), between 2 end positions.

12. Device according to the preceding claim, wherein the rigid core tube (11) comprises an inner bore and upstream (24) and downstream (26) holes and wherein the wheels (80) move between a position left from the upstream holes (24) to a position left from or right above the downstream holes (26).

13. Device according to claim 11, wherein the passage for the liquid is completely external to the core tube (11), wherein the free volume (13) extends up to the left end of said core tube (11) and wherein at the end of their left course, the wheels (80) are lifted so as to let liquid in the free volume (13).

14. A liquid injecting system comprising a tank (5) for storing the liquid and a feeding device (6, 7 ,8) for injecting the liquid into a fluid flow, **characterized in that** the feeding device comprises a pumping device according to anyone of the claims 1 to 13.

15. Use of the liquid injecting system of claim 14 to a selective catalytic reduction (SCR) system wherein the liquid is an urea solution, the fluid flow is an exhaust gas flowing in an exhaust line (3) coupled to an internal combustion engine (1).

## Patentansprüche

1. Vorrichtung zum Pumpen einer Flüssigkeit, die Folgendes umfasst:
- eine starre Kernröhre (11);
- eine flexible Röhre (10), die außerhalb der starren Kernröhre (11) und mindestens teilweise darum herum positioniert ist;
- einen Durchgang für die Flüssigkeit von einem Einlass zu einem Auslass der Vorrichtung, der ein freies Volumen (13) umfasst, das sich zwischen der starren Kernröhre (11) und der flexiblen Röhre (10) erstreckt; und
- eine Quetschanordnung (12), die mindestens ein Presselement (40, 70, 80) umfasst, das fähig ist, auf die flexible Röhre (10) zu wirken, um die Form und/oder Größe des freien Volumens (13) zu ändern.

2. Vorrichtung nach dem vorangehenden Anspruch, wobei der Durchgang mindestens 2 freie Volumen (13) mit langgestreckter Form, die sich zwischen dem starren Kern und der flexiblen Röhre um 180° voneinander um die Umfänge der Röhren (1a, 11) versetzt befinden, und wobei die Quetschanordnung (12) mindestens 2 Presselemente (40) umfasst, die sich entlang der Röhren (10, 11) einander gegenüber befinden, um auf die freien Volumen (13) zu wirken.

3. Vorrichtung nach einem der vorangehenden Ansprüche, wobei es sich bei dem bzw. den Presselementen (40) um bewegliche mechanische Teile (70) mit einer Wechselbewegung oder Rollen (80) mit einer drehenden und linearen Bewegung zwischen zwei Endlagen handelt.

4. Vorrichtung nach einem der vorangehenden Ansprüche, wobei:
- die Kernröhre (11) eine Innenbohrung (21, 31) umfasst;
- die flexible Röhre (10) im Wesentlichen an beiden Enden der flexiblen Röhre (10) gegen die Kernröhre (11) abgedichtet ist; und
- das freie Volumen (13) durch mindestens eine Öffnung (24) mit der Innenbohrung (21, 31) in Verbindung steht.

5. Vorrichtung nach einem der vorangehenden Ansprüche, umfassend ein Unterdrucksetzungs-Rückschlagventil (28) und eine stromaufwärts von dem Unterdrucksetzungs-Rückschlagventil (28) positionierte Zwischenkammer (25), wobei sich das Unterdrucksetzungs-Rückschlagventil (28) in einem offenen Zustand befindet, wenn der Flüssigkeitsdruck in der Zwischenkammer (25) um einen ersten definierten Differenzdruckwert größer ist als der Flüssigkeitsdruck stromabwärts von dem Unterdrucksetzungs-Rückschlagventil (28).

6. Vorrichtung nach dem vorangehenden Anspruch, umfassend eine Impulskammer (23) und ein Umgehungs-Rückschlagventil (27), wobei das Umgehungs-Rückschlagventil (27) stromaufwärts von der Zwischenkammer (25) positioniert ist, die Impulskammer (23) das Umgehungs-Rückschlagventil (27) umgeht, und sich das Umgehungs-Rückschlagventil (27) in einem offenen Zustand befindet, wenn der Flüssigkeitsdruck in der Zwischenkammer (25) um einen zweiten definierten Differenzdruckwert größer ist als der Flüssigkeitsdruck stromaufwärts von dem Umgehungs-Rückschlagventil (27).

7. Vorrichtung nach Anspruch 5 oder 6, umfassend eine Druckregelungsanordnung, die mindestens eine der folgenden Vorrichtungen umfasst: ein Unterdrucksetzungs-Rückschlagventil (28) ein Umgehungs-Rückschlagventil (27) und einen Druckschalter oder einen Drucksensor.

8. Vorrichtung nach einem der vorangehenden Ansprüche, umfassend eine Druckdämpfungskammer (29) mit einem vorherbestimmten Volumen, die dazu angepasst ist, Pulsationen des Flüssigkeitsdrucks zu dämpfen.

9. Vorrichtung nach dem vorangehenden Anspruch, wobei die Kernröhre (11) einen stromaufwärtigen Teil (20) und einen stromabwärtigen Teil (30) umfasst, die durch die Druckdämpfungskammer (29) aneinander gekoppelt sind.

10. Vorrichtung nach eine der vorangehenden Ansprüche, wobei die flexible Röhre (10) aus einem Elastomer (EPDM, NBR, einer flexiblen Sorte von Polyamid...) hergestellt ist und wobei die Kernröhre (11) aus einem starren Kunststoffmaterial hergestellt ist, das aus Polyacetal (wie POM oder Polyoxymethylen) und starren Polyamiden (PA) ausgewählt wird.

11. Vorrichtung nach einem der vorangehenden Ansprüche, wobei die Quetschanordnung (12) ein Paar Rollen (80) umfasst, die auf die flexible Röhre (10) pressen und sich zwischen 2 Endlagen abwechselnd von links nach rechts und von rechts nach links entlang der Röhre (10) bewegen.

12. Vorrichtung nach dem vorangehenden Anspruch, wobei die starre Kernröhre (11) eine Innenbohrung sowie stromaufwärtige (24) und stromabwärtige (26) Löcher umfasst und wobei sich die Rollen (80) zwischen einer Lage links von den stromaufwärtigen Löchern (24) zu einer Lage links von oder rechts über den stromabwärtigen Löchern (26) bewegen.

13. Vorrichtung nach Anspruch 11, wobei der Durchgang für die Flüssigkeit vollständig außerhalb der Kernröhre (11) ist, wobei sich das freie Volumen (13) bis zum linken Ende der Kernröhre (11) erstreckt und wobei die Räder (80) am Ende ihres Laufs nach links angehoben werden, um Flüssigkeit in das freie Volumen (13) zu lassen.

14. Flüssigkeitseinspritzsystem, umfassend einen Behälter (5) zum Speichern der Flüssigkeit und eine Zufuhrvorrichtung (6, 7, 8) zum Einspritzen der Flüssigkeit in einen Fluidstrom, **dadurch gekennzeichnet, dass** die Zufuhrvorrichtung eine Pumpvorrichtung nach einem der Ansprüche 1 bis 13 umfasst.

15. Verwendung des Flüssigkeitseinspritzsystems nach Anspruch 14 in einem System zur selektiven katalytischen Reduktion (SCR), wobei es sich bei der Flüssigkeit um eine Harnstofflösung handelt und es sich bei dem Fluidstrom um ein Abgas handelt, das in einer an eine Verbrennungskraftmaschine (1) gekoppelte Abgasleitung (3) strömt.

## Revendications

1. Dispositif de pompage d'un liquide, comprenant :
- un tube de noyau rigide (11) ;
- un tube flexible (10) positionné à l'extérieur dudit tube de noyau rigide (11) et au moins en partie autour de celui-ci ;
- un passage pour le liquide depuis une entrée vers une sortie du dispositif et comprenant un volume libre (13) s'étendant entre le tube de noyau rigide (11) et le tube flexible (10) ; et
- un agencement de compression (12) comprenant au moins un élément de pressage (40, 70, 80) capable d'agir sur le tube flexible (10) de manière à modifier la forme et/ou la taille du volume libre (13).

2. Dispositif selon la revendication précédente, dans lequel le passage comprend au moins deux volumes libres (13) de forme allongée situés entre le tube de noyau rigide et le tube flexible, à 180° l'un de l'autre autour de la périphérie des tubes (10, 11) et dans lequel l'agencement de compression (12) comprend au moins 2 éléments de pressage (40) situés à l'opposé l'un de l'autre le long des tubes (10, 11) de manière à agir sur lesdits volumes libres (13).

3. Dispositif selon l'une quelconque des revendications précédentes, dans lequel le ou les éléments de pressage (40) sont des pièces mécaniques mobiles (70) qui présentent un mouvement alternatif ou des roues (80) ayant un mouvement de rotation et un mouvement linéaire entre deux positions d'extrémité.

4. Dispositif selon l'une quelconque des revendications précédentes, dans lequel :
- le tube de noyau (11) comprend un alésage interne (21, 31) ;
- le tube flexible (10) est scellé contre le tube de noyau (11) substantiellement aux deux extrémités du tube flexible (10) ; et
- le volume libre (13) communique avec l'alésage interne (21, 31) par le biais d'au moins une ouverture (24).

5. Dispositif selon l'une quelconque des revendications précédentes, comprenant un clapet anti-retour de pressurisation (28) et une chambre intermédiaire (25) positionnée en amont du clapet anti-retour de pressurisation (28), le clapet anti-retour de pressurisation (28) étant dans un état ouvert lorsque la pression de liquide dans la chambre intermédiaire (25) dépasse la pression de liquide en aval du clapet anti-retour de pressurisation (28) d'une première valeur de pression différentielle définie.

6. Dispositif selon la revendication précédente, comprenant une chambre d'impulsion (23) et un clapet anti-retour de dérivation (27), le clapet anti-retour de dérivation (27) étant positionné en amont de la chambre intermédiaire (25), la chambre d'impulsion (23) contournant le clapet anti-retour de dérivation (27), le clapet anti-retour de dérivation (27) étant dans un état ouvert lorsque la pression de liquide dans la chambre intermédiaire (25) dépasse la pression de liquide en amont du clapet anti-retour de dérivation (27) d'une deuxième valeur de pression différentielle définie.

7. Dispositif selon la revendication 5 ou 6, comprenant un agencement de régulation de pression comprenant au moins l'un des dispositifs suivants : un clapet anti-retour de pressurisation (28), un clapet anti-retour de dérivation (27) et un commutateur de pression ou un capteur de pression.

8. Dispositif selon l'une quelconque des revendications précédentes, comprenant une chambre d'amortissement de pression (29) ayant un volume prédéterminé prévu pour amortir les pulsations de la pression de liquide.

9. Dispositif selon la revendication précédente, dans lequel le tube de noyau (11) comprend une partie amont (20) et une partie aval (30) accouplées l'une à l'autre par le biais de la chambre d'amortissement de pression (29).

10. Dispositif selon l'une quelconque des revendications précédentes, dans lequel le tube flexible (10) est fabriqué en un élastomère (EPDM, NBR, une qualité flexible de polyamide...) et dans lequel le tube de noyau (11) est fabriqué en un matériau plastique rigide choisi parmi le polyacétal (comme du POM ou polyoxyméthylène) et des polyamides rigides (PA).

11. Dispositif selon l'une quelconque des revendications précédentes, dans lequel l'agencement de compression (12) comprend une paire de roues (80) pressant sur le tube flexible (10) et se déplaçant de manière alternative de gauche à droite et de droite à gauche le long dudit tube (10), entre deux positions d'extrémité.

12. Dispositif selon la revendication précédente, dans lequel le tube de noyau rigide (11) comprend un alésage interne et des trous amont (24) et aval (26) et dans lequel les roues (80) se déplacent entre une position à gauche des trous amont (24) jusqu'à une position à gauche ou juste au-dessus des trous aval (26).

13. Dispositif selon la revendication 11, dans lequel le passage pour le liquide est complètement à l'extérieur du tube de noyau (11), le volume libre (13) s'étend jusqu'à l'extrémité gauche dudit tube de noyau (11) et à la fin de leur course gauche, les roues (80) sont soulevées de manière à laisser entrer du liquide dans le volume libre (13).

14. Système d'injection de liquide comprenant un réservoir (5) pour stocker le liquide et un dispositif d'alimentation (6, 7, 8) pour injecter le liquide dans un écoulement fluide, **caractérisé en ce que** le dispositif d'alimentation comprend un dispositif de pompage selon l'une quelconque des revendications 1 à 13.

15. Utilisation du système d'injection de liquide selon la revendication 14, dans un système de réduction catalytique sélective (SCR), le liquide étant une solution d'urée, l'écoulement de fluide étant un gaz d'échappement s'écoulant dans un conduit d'échappement (3) accouplé à un moteur à combustion interne (1).
